# EUROPEAN PATENT APPLICATION

(11) **EP 3 757 142 A1**
(43) Date of publication of application: **30.12.2020**
(21) Application number: 19181957.2
(22) Date of filing: 24.06.2019
(51) Int. Cl.: C08G 18/10, C08G 18/24, C08G 18/36, C08G 18/40, C08G 18/48, C08G 18/64, C08G 18/66, C08G 18/79, C09D 163/00, C09D 175/04

(54) **POLYURETHANE COMPOSITION FOR THE MANUFACTURE OF FLOORS, ESPECIALLY FOR MARINE APPLICATIONS**

(71) Applicant: SIKA TECHNOLOGY AG, 6340 Baar (CH)
(72) Inventor: Ras, Marcel, 8103GK Raalte (NL); Borkent, Roland, 7411KZ Deventer (NL); Oscar, Nettekoven, 6665 LL Driel (NL)
(74) Representative: Sika Patent Attorneys

(57) **Abstract**

The present invention relates to a polyurethane composition comprising:
a) a polyol component (A) comprising
- at least one reaction product of castor oil with ketone resins having an OH number of 110 to 200 mg KOH/g **A1,** and
- at least one aliphatic triol **A2,** and

b) an polyisocyanate component (B) comprising
- at least one polyisocyanate resin based on hexamethylene diisocyanate (HDI) **B1** comprising one or more polyisocyanate prepolymers derived from the uretdione, the biuret or the isocyanurate of hexamethylene diisocyanate (HDI) blended with a member of the group consisting of the uretdione, the biuret or the isocyanurate of HDI, wherein the weight ratio of the polyol **A1** to the polyol **A2 ((A1)/(A2))** is in the range of 1.25 - 2.5.

The invention provides curable flooring compositions that display good adhesion and proper mechanical performance, provide a Shore A hardness of 55-70, preferably 60-65, after curing, produce a nice appeal upon sanding the cured composition and quickly regain the original form after load has been placed on the cured material.

## Description

### Technical field

The invention relates to polyurethane composition for the manufacture of floors, especially for marine applications.

### Background of the invention

When doing floors, especially for marine applications, it is important to safeguard adhesion and proper mechanical performance of the flooring compositions on the substrate. Especially for marine applications specific additional requirements have to be met including the property of regaining the original form after load has been placed on the floor (residual indentation) as well as a certain Shore A hardness that increase the slip resistance of smooth ship decks and increase the comfort for walking on them as well as.

In the state of the art, such products based on one- or two-component polyurethane compositions are available but do not meet the above mentioned specific requirements for marine applications, especially with respect to the needed mechanical properties.

In the field of marine applications, the industry is facing the issue of providing flooring surfaces that have specific functional characteristics, in combination with decorative effects that appeal to the eye. A recent trend in the industry is to use polymeric material as an alternative to natural flooring materials. This material is manufactured to be able to produce ship decks that combine functionality with decorative design. To do so it is advantageous to have an easy to grind and polish material that leads to an appealing appearance after said treatment.

There is a strong interest in the field for compositions that display good adhesion and proper mechanical performance, provide an Shore A hardness of 55-70, preferably 60-65, after curing, produce a nice appeal upon sanding the cured composition and quickly regain the original form after load has been placed on the cured material.

### Summary of the invention

Therefore, the object of the present invention is to provide curable flooring compositions that display good adhesion and proper mechanical performance, provide an Shore A hardness of 55-70, preferably 60-65, after curing, produce a nice appeal upon sanding the cured composition and quickly regain the original form after load has been placed on the cured material.

Surprisingly, this object could be achieved by a polyurethane composition comprising:
a) a polyol component (A) comprising
   - at least one reaction product of castor oil with ketone resins having an OH number of 110 to 200 mg KOH/g **A1**, and
   - at least one aliphatic triol **A2**, and
b) an polyisocyanate component (B) comprising
   - at least one polyisocyanate resin based on hexamethylene diisocyanate (HDI) **B1** comprising one or more polyisocyanate prepolymers derived from the uretdione, the biuret or the isocyanurate of hexamethylene diisocyanate (HDI) blended with a member of the group consisting of the uretdione, the biuret or the isocyanurate of HDI.

The weight ratio of the polyol **A1** to the polyol **A2 ((A1)/(A2))** is in the range of 1.25 -2.5.

The composition of the invention is particularly suited as a floor, especially for marine applications.

### Detailed description of the invention

Substance names beginning with "poly", such as e.g. polyol or polyisocyanate, designate substances which formally contain, per molecule, two or more of the functional groups occurring in their names.

The average molecular weight is understood to mean the number average molecular weight, as determined using conventional methods, preferably by gel permeation-chromatography (GPC) using polystyrene as standard (Mn), styrenedivinylbenzene gel with porosity of 100 Angstrom, 1000 Angstrom and 10000 Angstrom as the column and tetrahydrofuran as a solvent, at 35°C.

The term average functionality in this document describes the average number of functional groups on a given molecule. For, e.g., a polyisocyanate, a functionality of 2 would describe a polyisocyanate molecule with in average 2 isocyanate groups per molecule.

The composition of the invention consists of at least 2 individual components, which are stored separately in order to avoid spontaneous reaction, and are combined when a polyurethane flooring or coating is to be prepared. The components may be assembled together as a package. The at least two components are a polyol component (A) and a polyisocyanate component (B) which are also simply referred to as component (A) and component (B), respectively, which are described in the following.

### Polyol component (A)

The polyol component (A) comprises at least one reaction product of castor oil with ketone resins having an OH number of 110 to 200 mg KOH/g **A1**. Preference is given to an OH number of 155 to 190 mg, especially 140 to 170 mg, especially preferably 150-160 mg KOH/g. It preferably has an OH equivalent weight of 300 to 400 g/eq.
Particular preference is given to reaction products of castor oil with ketone resins based on cyclohexanone, especially those as sold, for example, by Nuplex Resins GmbH, Germany under the Setathane® 1150 name and by BASF, Germany under the Sovermol® 805 name.
In the present document, the term "castor oil" is preferably understood to mean castor oil as described in the Online Römpp Chemie Lexikon [Römpp's Chemical Lexicon online], Thieme Verlag, retrieved 23.12.2016.
In the present document, the term "ketone resin" is preferably understood to mean ketone resin as described in Online Römpp Chemie Lexikon [Römpp's Chemical Lexicon online], Thieme Verlag, retrieved 23.12.2016.

The polyol component (A) further comprises at least one aliphatic triol **A2**.

Preferably, the aliphatic triol A2 is an aliphatic triol having an average molecular weight of 360 to 4000 g/mol, preferably 400 and 3000 g/mol, more preferably 400 and 2000 g/mol, 400 and 1000 g/mol, most preferably 400 and 800 g/mol.

There are different kinds of such aliphatic triols. Thus, for example, they may contain urethane and/or urea and/or ether groups. The morphology of the triols may be very different. Thus, for example, star-shaped or comb-shaped triols are possible. It is additionally possible for the triol to contain not only primary but also secondary hydroxyl groups. Preferably all three hydroxyl groups are primary hydroxyl groups.

Aliphatic triols **A2** can be attained, for example, from an aliphatic triisocyanate, more particularly from an isocyanurate, which is formed from three isocyanate molecules, in an excess of aliphatic diols, more particularly of polyetherdiols, where appropriate by further subsequent extension by means of aliphatic diisocyanates and aliphatic diols.

Further exemplary aliphatic triols **A2** may be obtained from low molecular weight aliphatic triols, such as trimethylolpropane or glycerol, for example, and an aliphatic diisocyanate, with subsequent reaction with an aliphatic diol.

Prefered aliphatic triols **A2** are products of an alkoxylation reaction of low molecular weight aliphatic triols, preferably trimethylolpropane and glycerol. In particular these are triols selected from the list consisting of ethoxylated, propoxylated and butoxylated aliphatic triols.

The weight ratio of the polyol **A1** to the polyol **A2 ((A1)/(A2))** is in the range of 1.25 - 2.5, preferably 1.5 - 2.25, most preferably 1.75 - 2.0.
A ratio lower than 1.25 leads to the disadvantage of a too high value for the Shore A hardness and too low values for the elongation values. A ratio higher than 2.5 leads to the disadvantage of insufficient mechanical properties and toughness.

Preferably, the total amount of the sum of the polyol **A1** and the polyol **A2 ((A1)+(A2))** is 30 to 75%, preferably 35 to 60%, more preferably 40 to 50% by weight, based on the total weight of component (A).

Apart from the above mentioned polyols, component (A) may contain further additives. Such additives are commonly used, if desired, and typically known to the persons skilled in the art of polyurethanes. Examples of optional additives are plasticizers, pigments, adhesion promoters, such as silanes, e.g. epoxysilanes, (meth)acrylatosilanes and alkylsilanes, stabilizers against heat, light, and UV radiation, thixotropic agents, flow improving additives, flame retardants, surface active agents such as defoamers, wetting agents, flow control agents, deaerating agents, biocides and emulsifiers.

Further used optional additives for component (A) are one or more plasticizers, such as benzoates (benzoate esters), benzyl phthalates, e.g. Santicizer®160 (benzylbutyl phthalate), citric acid esters, e.g. Citrofol®B II (acetyltributyl citrate), ethoxylated castor oil, stearates (perferably ethylene oxide modified), propyleneglycol laurates, and diisopropylbenzene, e.g. Benzoflex®9-88.

In a preferred embodiment, component (A) comprises 0 to 10%, preferably 0 to 5% by weight, 0 to 1% by weight of a plasticizer, 0% by weight, based on the total weight of component (A).

Preferred suitable additives include pigments, such as inorganic and organic pigments, e.g. Bayferrox® and Heucosin®, defoamers, such as solvent silicon free and polyorganosiloxane, e.g. Tego®Airex and Efka®, and emulsifiers such as calcium hydroxide and calcium oxide.

Preferably, the polyol component (A) further comprises inorganic and organic fillers, preferably selected from the list consisting of ground or precipitated calcium carbonates which are optionally coated with fatty acids in particular stearates, barite (heavy spar), talc, quartz powders, quartz sand, dolomites, wollastonites, kaolins, calcinated kaolins, molecular sieves and silicic acids including highly-dispersed silicic acids from pyrolysis processes.

Preferably, the particle size of the inorganic and organic fillers is 0.1-50 µm, more preferably 1-30 µm.

Preferably, the amount of the inorganic and organic fillers is between 25 - 55 weight-%, preferably between 30 - 50 weight-%, more preferably between 40 - 45 weight-%, based on the total weight of the polyol component (A).

Preferably, the polyol component (A) is essentially free of water. Preferably the amount of water is less than 0.5 weight-%, preferably less than 0.1 weight-%, more preferably less than 0.05 weight-%, based on the total weight of the polyol component (A).

### Polvisocvanate component (B)

The polyisocyanate component (B) contains at least one polyisocyanate resin based on hexamethylene diisocyanate (HDI) **B1** comprising one or more polyisocyanate prepolymers derived from the uretdione, the biuret or the isocyanurate of hexamethylene diisocyanate (HDI) blended with a member of the group consisting of the uretdione, the biuret or the isocyanurate of HDI. These at least one polyisocyanate prepolymers preferably each have an NCO-content of 5-15% by weight relative to the mass of the prepolymers.

The polyisocyanate resin **B1** preferably comprises at least one polyisocyanate prepolymer derived from the isocyanurate trimer of HDI, blended with the uretdione of HDI.

More preferably , the polyisocyanate resin **B1** comprises at least one polyisocyanate prepolymer derived from the isocyanurate trimer of HDI in an amount of 75 - 95 wt.-%, preferably 80 - 90 wt.-%, based on the total amount of the polyisocyanate resin **B1**, and an uretdione of HDI in an amount of 5 - 25 wt.-%, preferably 10-20 wt.-%, based on the total amount of the polyisocyanate resin **B1**.
The polyol component of the polyisocyanate prepolymers is preferably selected from polyester polyols, polyether polyester polyols, polyether polyols or combinations thereof. Examples of suitable relatively high molecular weight polyol compounds which may be used for the preparation of the prepolymers include polyester polyols based on low molecular weight, monomeric alcohols and polybasic carboxylic acids such as adipic acid, sebacic acid, phthalic acid, isophthalic acid, tetra-hydrophthalic acid, hexahydrophthalic acid, maleic acid, the anhydrides of these acids and mixtures of these acids and/or acid anhydrides. Hydroxyl group-containing polylactones, especially poly-e-caprolactones, are also suitable for the preparation of the prepolymers.
Polyether polyols, which are obtained in known manner by the alkoxylation of suitable starting molecules, are also suitable for the preparation of the isocyanate group-containing prepolymers. Examples of suitable starting molecules for the polyether polyols include monomeric polyols, water, organic polyamines having at least two NH bonds and any mixtures of these starting molecules. Ethylene oxide and/or propylene oxide are particularly suitable alkylene oxides for the alkoxylation reaction. These alkylene oxides may be introduced into the alkoxylation reaction in any sequence or as a mixture.
Also suitable for the preparation of the prepolymers are the hydroxyl group-containing polycarbonates which may be prepared by the reaction of monomeric diols with phosgene and diaryl carbonates such as diphenyl carbonate.

Preferably the polyisocyanate resin **B1** has an average NCO functionality of 2.0 or higher, 2.2 or higher, more preferably 2.2 to 3, 2.0 to 2.6, most preferably 2.2 to 2.4.

Preferably the polyisocyanate resin **B1** has an NCO-content of 5-15%, preferably 8-12%, by weight relative to the mass of the prepolymers.

Preferably the polyisocyanate resin **B1** has an NCO equivalent weight of 300 - 1000 g, preferably 300 - 600 g, more preferably 300 - 400 g.

Preferably the polyisocyanate resin **B1** is substantially free of isocyanate (HDI) monomer, i.e. less than 5%, less than 1%, less than 0.5% and more preferably no greater than 0.3% as measured according to DIN EN ISO 10 283.

Preferably, the polyisocyanate resin **B1** has a viscosity of 1000- 5000, preferably 1000- 2500, most preferably 1200- 2000, mPas at 23° C.

A preferred polyisocyanate resin **B1** is available from Covestro under the trade designation "Desmodur E 2863 XP".

The component (B) may optionally comprise in addition to the polyisocyanate resin **B1** one or more other polyisocyantes, especially aliphatic polyisocyantes, in relatively small amounts, e.g. less than 20 % by weight, preferably less than 10 % by weight, less than 5 % by weight, less than 2 % by weight, less than 1 % by weight, more preferably than 0.1 % by weight, based on the total of component (B).

The component (B) preferably consist of more than 70 % by weight, more than 80 % by weight, more than 90 % by weight, more than 95 % by weight, of polyisocyanate resin **B1**, based on the total weight of component (B).

### Suitable proportions for the composition

Preferably, the ratio by weight of component (A) : component (B) is 5:1 to 2:1, more preferably 4:1 to 3:1.

Preferably the molar ratio between free NCO-groups and NCO-reactive groups, preferably OH-groups, in the composition of the invention before mixing is between 0.8 - 1.2, preferably 0.9 - 1.1.

The application temperature is e.g. from about 8 to 40°C, preferably from about 10 to 30°C.

The cured composition is preferably obtained by curing the composition at a curing temperature from 5°C to 35°C, preferably from 10°C to 30°C, and at a relative humidity from 20% to 80%.

### Application Method

A further aspect of the present invention therefore relates to a method for applying a mixed polyurethane composition as described in detail above, preferably as a flooring material, wherein the method comprises the steps of:
a) providing a space where the polyurethane composition is applied;
b) mixing components (A) and (B) of the polyurethane composition to obtain a mixed polyurethane composition;
c) applying the mixed polyurethane composition on a desired location and in a desired shape within the space provided;
d) allowing the applied mixed polyurethane composition to cure.

For use, the polyol component (A) and the hardener component (B) are mixed with each other to prepare the mixed polyurethane composition. Thereafter, the mixed polyurethane composition is applied on a desired location and in a desired shape to create a flooring surface, especially ship decks.

The space provided to apply the mixed polyurethane composition of the invention can be made of any convenient material selected from the group consisting of concrete, glass, gypsum board, metal, plastic, rubber, wood, and combinations thereof. Preferably, the space provided to apply the mixed polyurethane composition of the invention is made up from metal.

Preferably, the thickness of the cured polyurethane composition in step d) is 5 -15 mm, more preferably 5 - 10 mm. This is especially preferred if the creation of ship decks is intended.

In an embodiment, the method for applying a mixed polyurethane composition, preferably contains a step e) wherein the surface of the cured polyurethane composition of step d) is mechanically treated, preferably grinded, preferably 5 - 50 %, more preferably 10 - 20 %, of the thickness of the cured polyurethane composition is thereby removed.

Particularly, this method is used to create floors and/or ship decks, especially ship decks.

The polyurethane composition of the invention is preferably used as a flooring material. More preferably, as flooring material for ship decks.

### Sanding/Grinding

In an embodiment of the invention, sanding is performed on the surface of the cured applied/casted mixed polyurethane composition.

Preferably, sanding is performed by using a sand paper like material, or more preferably a sand paper with a grit size according to ISO 6344 of 12 - 40, preferably 16 - 40, more preferably 16 - 24, most preferably 16.

A skilled artisan will know that any other suitable means available in the art can also be used to perform sanding. For e.g. sanding machine

Preferably, sanding is performed to create an even surface and appealing appearance of the surface.

Preferably, sanding is performed in creating ship decks.

### Examples

### Composition

The composition is a two-component polyurethane flooring composition. The composition of component (A) and component (B) are shown below. The ingredients indicated below were mixed to form component (A) and component (B):

**Table 1**

| **Ingredient** | **Weight % based on weight of component (A)** | |
|---|---|---|
| | **Ref.1** | **Ex.1** |
| Reaction product of castor oil with ketone resin, OH number of 155 mg KOH/g, OH equivalent weight of about 360 g/eq, Setathane D 1150 (Nuplex Resins GmbH, Germany) | 30 | 30 |
| Trifunctional polypropylene polyether polyol, OH-number 370-400 mg KOH/g | 16 | 16 |
| Plasticizer | 5 | 5 |
| Talc (filler) | 5 | 5 |
| Micronized dolomite (filler) | 29.7 | 29.7 |
| Baryte (filler) | 9 | 9 |
| Molecular sieve | 5 | 5 |
| Defoamer | 0.2 | 0.2 |
| Tin catalyst | 0.1 | 0.1 |

**Table 2**

| Ingredient | Weight % based on weight of component (B) | |
|---|---|---|
| | Ref.1 | Ex.1 |
| HDI trimer containing 70% trimer and smaller amounts of higher oligomers, overall NCO functionality=3.1, Desmodur N 3600 (Covestro) | 100 | |
| Polyisocyanate resin based on HDI containing approx. 83 wt.-% of polyisocyanate prepolymers derived from the isocyanurate trimer of HDI and approx. 15 wt.-% uretdione of HDI, average NCO-functionality of 2.2, Desmodur E 2863 XP (Covestro) | | 100 |
| | | |
| Mix ratio A : B | 15: 5 | 15:10 |

1 kg of total material (sum of (A) and (B) component) was mixed for 3 min at 300 rpm and further tested below.

**Table 3, all test performed after curing test samples 1 week at room temperature and for 2 weeks at 50°C**

| | **Ref.1** | **Ex.1** |
|---|---|---|
| Tensile strength (DIN 53504) | Approx. 7.5 MPa | 2.5 ± 0.15 MPa |
| Tear strength (ISO 34-1) | Approx. 18 N/mm | 9.5 ±1.5 N/mm |
| Elongation at Break (DIN 53504) | 60 % | 123 % |
| Short A hardness (DIN 53505) | 87 | 63 |
| Sanding behaviour | Difficult/burdensome to level/smoothen surface, pale unappealing surface | Easy to level/smoothen surface, bright appealing surface |
| Adhesion (ISO 4624) | > 1.5 N/mm² | > 1.5 N/mm² |

### Effect of sanding on appearance of the cured surface

Tests were conducted to study the effect of sanding on the appearance of the cured surface of the mixed polyurethane composition. The polyol component (A) is added to the hardener component (B) of the two component polyurethane resin and mixed to obtain a mixed polyurethane composition. The mixed polyurethane composition is poured on a surface divided into 4 adjacent areas of 1x1 meter. The height of the cured areas differed by 2 mm each.

To study the effect of sanding/grinding, a sand paper with a corn size of 16 micrometers was used. Tested was the ease of removing the height difference between the 4 adjacent areas until obtaining an even and smooth surface as well as the appearance of the obtained surface.

### Indentation test

Samples of the mixed polyurethane composition were cured for one week at room temperature and for 2 weeks at 50° C. On a Zwick indentation tester the samples were loaded with a stamp with a weight of 33 kg/cm² for one hour. Then the deformation/indentation was measured, the load was removed from the stamp and the relaxation/recovery of the material was measured at 30 s, 1 min, 10 min and 15 min after removing the load. The measurement show the strong and fast recovery ability of the invention.

**Table 4**

| | **Ref.1** | **Ex.1** |
|---|---|---|
| Indentation (mm) after 1 hour | 0.68 | 2.810 |
| relaxation t=0 (percent of original indentation) | 100 % | 100 % |
| after 30 sec | 5.88 % | 2.67 % |
| after 1 min | 5.15 % | 2.31 % |
| after 10 min | 4.41 % | 1.78 % |
| after 15 min | 3.68 % | 1.42 % |

## Claims

1. A polyurethane composition comprising:
a) a polyol component (A) comprising
- at least one reaction product of castor oil with ketone resins having an OH number of 110 to 200 mg KOH/g **A1**, and
- at least one aliphatic triol **A2**, and
b) an polyisocyanate component (B) comprising
- at least one polyisocyanate resin based on hexamethylene diisocyanate (HDI) **B1** comprising one or more polyisocyanate prepolymers derived from the uretdione, the biuret or the isocyanurate of hexamethylene diisocyanate (HDI) blended with a member of the group consisting of the uretdione, the biuret or the isocyanurate of HDI;
wherein the weight ratio of the polyol **A1** to the polyol **A2 ((A1)/(A2))** is in the range of 1.25 - 2.5.

2. The polyurethane composition according to claim 1, wherein the aliphatic triol **A2** is an aliphatic triol having an average molecular weight of 360 to 4000 g/mol, most preferably 400 and 800 g/mol.

3. The polyurethane composition according to any one of preceding claims, wherein the aliphatic triol **A2** is selected from the list consisting of ethoxylated, propoxylated and butoxylated aliphatic triols.

4. The polyurethane composition according to any one of preceding claims, wherein the weight ratio of the polyol **A1** to the polyol **A2 ((A1)/(A2))** is in the range of 1.5 - 2.25, preferably 1.75 - 2.0.

5. The polyurethane composition according to any one of proceeding claims, wherein total amount of the sum of the polyol **A1** and the polyol **A2 ((A1)+(A2))** is 30 to 75%, preferably 35 to 60%, more preferably 40 to 50% by weight, based on the total weight of the polyol component (A).

6. The polyurethane composition according to any one of proceeding claims, wherein the polyol component (A) further comprises inorganic and organic fillers in an amount between 25 - 55 weight-%, preferably between 40 - 45 weight-%, based on the total weight of the polyol component (A).

7. The polyurethane composition according to any one of proceeding claims, wherein the polyol component (A) is essentially free of water, preferably the amount of water is less than 0.5 weight-%, more preferably less than 0.1 weight-%, based on the total weight of the polyol component (A).

8. The polyurethane composition according to any one of proceeding claims, wherein the polyisocyanate resin **B1** comprises at least one polyisocyanate prepolymer derived from the isocyanurate trimer of HDI, blended with the uretdione of HDI.

9. The polyurethane composition according to any one of proceeding claims, wherein the polyisocyanate resin **B1** comprises at least one polyisocyanate prepolymer derived from the isocyanurate trimer of HDI in an amount of 75 - 95 wt.-%, preferably 80 - 90 wt.-%, based on the total amount of the polyisocyanate resin **B1**, and an uretdione of HDI in an amount of 5 - 25 wt.-%, preferably 10 - 20 wt.-%, based on the total amount of the polyisocyanate resin **B1**.

10. The polyurethane composition according to any one of proceeding claims, wherein the polyisocyanate resin **B1** has an average NCO functionality of 2.0 or higher, 2.2 or higher, more preferably 2.2 to 3, 2.0 to 2.6, most preferably 2.2 to 2.4.

11. The polyurethane composition according to any one of proceeding claims, wherein the component (B) consist of more than 70 % by weight, more than 80 % by weight, more than 90 % by weight, more than 95 % by weight, of polyisocyanate resin **B1**, based on the total weight of component (B).

12. The polyurethane composition according to any one of proceeding claims, wherein the molar ratio between free NCO-groups and NCO-reactive groups, preferably OH-groups, in the polyurethane composition before mixing is between 0.8 - 1.2, preferably 0.9 - 1.1.

13. A method for applying a mixed polyurethane composition according to any one of claims 1 to 12, preferably as a flooring material,
wherein the method comprises the steps of:
a) providing a space where the polyurethane composition is applied;
b) mixing components (A) and (B) of the polyurethane composition to obtain a mixed polyurethane composition;
c) applying the mixed polyurethane composition on a desired location and in a desired shape within the space provided;
d) allowing the applied mixed polyurethane composition to cure.

14. The method according to claim 13 further containing a step e) wherein the surface of the cured polyurethane composition of step d) is mechanically treated, preferably grinded, preferably 5 - 50 %, more preferably 10 - 20 %, of the thickness of the cured polyurethane composition is thereby removed.

15. The method according to claim 13 or 14 to create floors and/or ship decks.

16. Use of the polyurethane composition according to any of claims 1-12 as a flooring material, especially for ship decks.
